# EUROPEAN PATENT SPECIFICATION

(11) **EP 3 611 308 B1**
(45) Date of publication and mention of the grant of the patent: **22.02.2023**
(21) Application number: 19190784.9
(22) Date of filing: 08.08.2019
(51) Int. Cl.: E04D 5/06, B32B 27/30, E04D 5/14, C09J 7/24

(54) **A SELF-ADHERING ROOFING MEMBRANE**
SELBSTKLEBENDE DACHBAHN
MEMBRANE DE TOITURE AUTO-ADHÉSIVE

(30) Priority: 17.08.2018 CN 201810937429
(43) Date of publication of application: 19.02.2020
(73) Proprietor: SIKA TECHNOLOGY AG, 6340 Baar (CH)
(72) Inventor: Wei, Qin, Shanghai (CN); Wei, Yizhe, Shanghai (CN); Haufe, Markus, 8048 Zürich (CH); Carl, Wilfried, 8820 Wädenswil (CH)
(74) Representative: Sika Patent Attorneys

(56) References cited:
- WO-A1-98/56866
- US-A1- 2004 146 681
- US-A1- 2015 267 410

## Description

### Technical field

The invention relates to the field of waterproofing of above ground building constructions by using self-adhering roofing membranes. In particular, the invention relates to self-adhering roofing membranes, which can be used for providing fully-adhered roof systems.

### Background of the invention

In the field of construction polymeric sheets, which are often referred to as membranes, panels, or sheets, are used to protect underground and above ground constructions, such as basements, tunnels, and flat and low-sloped roofs, against penetration water. Waterproofing membranes are applied, for example, to prevent ingress of water through cracks that develop in concrete structures due to building settlement, load deflection, or concrete shrinkage. Roofing membranes used for waterproofing of flat and low-sloped roof structures are typically provided as single-ply or multi-ply membrane systems. In a single-ply system, the roof substrate is covered using a roofing membrane composed of a single waterproofing layer. In this case, the waterproofing layer typically contains a reinforcement layer to increase the mechanical stability of the roofing membrane. In multi-ply membrane systems, roofing membranes comprising multiple waterproofing layers having similar or different composition are used. Single-ply membranes have the advantage of lower production costs compared to the multi-ply membranes but they are also less resistant to mechanical damages caused by punctures of sharp objects.

Commonly used materials for the roofing membranes include plastics, in particular thermoplastics such as plasticized polyvinylchloride (p-PVC), thermoplastic olefins (TPE-O, TPO), and elastomers such as ethylenepropylene diene monomer (EPDM). The roofing membranes are typically delivered to a construction site in form of rolls, transferred to the place of installation, unrolled, and adhered to the substrate to be waterproofed. The substrate on which the roofing membrane is adhered may be comprised of variety of materials. The substrate may, for example, be a concrete, metal, or wood deck, or it may include an insulation board or recover board and/or an existing membrane.

Roofing membranes must be securely fastened to the roof substrate to provide sufficient mechanical strength to resist the shearing forces applied on it due to high wind loads. Roof systems are typically divided into two categories depending on the means used for fastening the roofing membrane to roof substrate. In a mechanically attached roof system, the roofing membrane is fastened to the roof substrate by using screws and/or barbed plates. Mechanical fastening enables high strength bonding but it provides direct attachment to the roof substrate only at locations where a mechanical fastener affixes the membrane to the surface, which makes mechanically attached membranes susceptible to flutter. In fully-adhered roof systems the membrane is typically adhered to the roof substrate indirectly by using an adhesive composition.

Roofing membranes can be adhesively adhered to roof substrates by using a number of techniques including contact bonding and using self-adhering membranes. In contact bonding both the membrane and the surface of the roof substrate are first coated with a solvent or water based contact adhesive after which the membrane is contacted with the surface of the substrate. The volatile components of the contact adhesive are "flashed off' to provide a partially dried adhesive film prior to contacting the membrane with the substrate. A fully-adhered roof system can also be prepared by using self-adhering roofing membranes having a pre-applied layer of adhesive composition coated on one of the exterior surfaces of the membrane. Typically the pre-applied adhesive layer is covered with a release liner to prevent premature unwanted adhesion and to protect the adhesive layer from moisture, fouling, and other environmental factors. At the time of use the release liner is removed and the roofing membrane is secured to the substrate without using additional adhesives. Roofing membranes having a pre-applied adhesive layer covered by release liner are also known as "peel and stick membranes".

In order to create a continuous waterproofing seal on the surface of a roof substrate, the edges of adjacent roofing membranes are overlapped to form sealable joints. These joints can then be sealed by bonding the bottom surface of an overlapping edge to the top surface of another overlapping edge or by using sealing tapes bridging the gap between top surfaces of both overlapping edges. The choice of the technique used for bonding of the overlapping surfaces of the adjacent membranes depends on the type of the membranes. In case of membranes composed of thermoplastic or non-crosslinked elastomeric materials, the overlapping portions of adjacent membranes can be bonded to each other by heat-welding. In case of self-adhering membranes, an area near the lengthwise edges of the membrane is typically left free of the adhesive in order to enable joining of the overlapping edges by heat-welding. The overlapping portions of adjacent membranes can also be adhered to each other by using an adhesive.

The State-of-the-Art self-adhering roofing membranes based on plasticized polyvinylchloride (p-PVC) typically comprise a migration barrier between the waterproofing layer and the adhesive layer to prevent the migration of plasticizers from the waterproofing layer into the adhesive layer. The presence of the migration barrier increases the production costs of the roofing membrane. Furthermore, in case of a fully adhered roofing system, the seams between overlapping edges of adjacent membranes are typically still sealed by heat-welding or by using special sealing tapes, both of which increase the installation time and eventually the costs of installation.

An example of a self-adhering roofing membrane with a polyvinylchloride-based waterproofing layer is disclosed in US 2004/146681 A1.

There thus remains a need for a self-adhering roofing membrane, which can be produced at lower costs compared to the State-of-the-Art self-adhering roofing membranes and which enables providing fully-adhered roof systems with decreased installation time and costs.

### Summary of the invention

The object of the present invention is to provide a self-adhering roofing membrane, which can be used for sealing of roof substrates against penetration of water.

Another object of the present invention is to provide a self-adhering roofing membrane, which can be used for providing fully-adhered roof systems, in which the seams between overlapping edges of adjacent roofing membranes are adhesively bonded to each other.

The subject of the present invention is a roofing membrane as defined in claim 1.

It was surprisingly found out that a roofing membrane comprising a polyvinylchloride-based waterproofing layer and an acrylic pressure sensitive adhesive layer coated on its surface, wherein the roofing membrane does not contain a migration barrier between the waterproofing layer and the adhesive layer, is able to solve or at least mitigate the problems of the State-of-the-Art self-adhering polyvinylchloride-based roofing membranes.

One of the advantages of the roofing membrane of the present invention is that it enables providing fully-adhered roofing systems with lower production and installation costs compared to the State-of-the-Art solutions.

Another advantage of the roofing membrane of the present invention is that it enables providing fully-adhered roof systems, in which the seams between overlapping edges of adjacent roofing membranes are adhesively bonded to each other using the same adhesive as that used for bonding of the roofing membrane to the surface of the roof substrate.

Other aspects of the present invention are presented in other independent claims. Preferred aspects of the invention are presented in the dependent claims.

### Brief description of the Drawings

Fig. 1 shows a cross-section of a roofing membrane (1) comprising a waterproofing layer (2), an adhesive layer (3), and a release liner (4) covering the outer major surface of the adhesive layer (3).
Fig. 2 shows a cross-section of a roofing membrane (1) comprising a waterproofing layer (2), an adhesive layer (3), a release liner (4) covering the outer major surface of the adhesive layer (3), and a layer of fiber material (5), which is fully embedded into the waterproofing layer (2).
Fig. 3 shows a cross-section of a fully-adhered roof system comprising a roof substrate (6) and a roofing membrane (1) comprising a waterproofing layer (2), an adhesive sealant layer (3), and a layer of fiber material (5), which is fully embedded into the waterproofing layer (2), wherein the roofing membrane is directly bonded to a surface of the roof substrate (6) via the adhesive layer (3).

### Detailed description of the invention

The subject of the present invention is a self-adhering roofing membrane (1) comprising:
i. A polyvinylchloride-based waterproofing layer (2) having a first and a second major surface,
ii. An adhesive layer (3) coated on and covering at least portion of the second major surface of the waterproofing layer (2), and
iii. Optionally a release liner (4), characterized in that
   the adhesive layer is an acrylic pressure sensitive adhesive layer, wherein the adhesive layer comprises at least 85 wt.-% of at least one acrylic polymer, based on the total weight of the adhesive layer.

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "polymer" designates a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically nonuniform.

The term "(meth)acrylic" designates both methacrylic and acrylic. Accordingly, (meth)acryloyl designates methacryloyl or acryloyl. A (meth)acryloyl group is also known as (meth)acryl group. A (meth)acrylic compound can have one or more (meth)acryl groups, such as mono- di-, tri- etc. functional (meth)acrylic compounds.

The term "molecular weight" refers to the molar mass (g/mol) of a molecule or a part of a molecule, also referred to as "moiety". The term "average molecular weight" refers to the number average molecular weight (Mₙ) of an oligomeric or polymeric mixture of molecules or moieties. The molecular weight may be determined by gel permeation chromatography.

The term "softening point" refers to a temperature at which compound softens in a rubber-like state, or a temperature at which the crystalline portion within the compound melts. The softening point can be determined by Ring and Ball measurement conducted according to DIN EN 1238 standard.

The term "melting temperature" refers to a crystalline melting point (Tₘ) as determined by differential scanning calorimetry (DSC) by using the method as defined in ISO 11357 standard using a heating rate of 2 °C/min. The measurements can be performed with a Mettler Toledo DSC 3+ device and the Tₘ values can be determined from the measured DSC-curve with the help of the DSC-software.

The term "glass transition temperature" (T_{g}) designates the temperature above which temperature a polymer component becomes soft and pliable, and below which it becomes hard and glassy. The glass transition temperature is preferably determined by dynamical mechanical analysis (DMA) as the peak of the measured loss modulus (G") curve using an applied frequency of 1 Hz and a strain level of 0.1 %.

The "amount or content of at least one component X" in a composition, for example "the amount of the at least one thermoplastic polymer" refers to the sum of the individual amounts of all thermoplastic polymers contained in the composition. Furthermore, in case the composition comprises 20 wt.-% of at least one thermoplastic polymer, the sum of the amounts of all thermoplastic polymers contained in the composition equals 20 wt.-%.

The term "room temperature" designates a temperature of 23 °C.

The polyvinylchloride-based waterproofing layer is preferably a sheet-like element having first and second major surfaces, i.e. top and bottom surfaces. The term "sheet-like element" refers in the present document to elements having a length and width at least 25 times, preferably at least 50 times, more preferably at least 150 times greater than the thickness of the element.

The adhesive layer is coated on the second major surface of the waterproofing layer. Preferably, the waterproofing layer and the adhesive layer are directly connected to each other over their opposing surfaces. The expression "directly connected" is understood to mean in the context of the present invention that no further layer or substance is present between the layers, and that the opposing surfaces of the layers are directly bonded to each other or adhere to each other. At the transition area between the two layers, the materials of the layers can also be present mixed with each other. In other words, there is no migration barrier between the waterproofing layer and the adhesive layer.

Preferably, the adhesive layer covers at least 50 %, more preferably at least 65 %, most preferably at least 75 % of the area of the second major surface of the waterproofing layer. According to one or more embodiments, the adhesive layer and the waterproofing layer have substantially same width and length and/or the adhesive layer covers substantially the entire area of the second major surface of the waterproofing layer. The term "substantially entire area" is understood to mean at least 85 %, preferably at least 90 %, more preferably at least 92 %, most preferably at least 95 % of the area of the second major surface of the waterproofing layer. Furthermore, it may also be preferable, for example due to production technical reasons, that narrow segments on the second major surface of the waterproofing layer near the longitudinal edges and having a width of 1-2 mm are left free of the adhesive layer.

The adhesive layer is an acrylic pressure sensitive adhesive layer. In the present disclosure, the term "pressure sensitive adhesive (PSA)" designates adhesive compositions, which adhere instantaneously to most substrates with the application of slight pressure and remains permanently tacky. The term "acrylic adhesive" designates in the present disclosure adhesive compositions containing one or more acrylic polymers as the main polymer component.

Preferably, the acrylic pressure sensitive adhesive is a water-based acrylic dispersion pressure sensitive adhesive or a solvent-based acrylic pressure sensitive adhesive.

The term "water-based acrylic dispersion adhesive" designates in the present disclosure adhesive compositions comprising one or more acrylic polymers, which have been formulated into aqueous dispersion or aqueous colloidal suspension. The term "water-based dispersion adhesive" refers to dispersion adhesives containing water as the main continuous (carrier) phase.

The term "solvent-based acrylic adhesive" designates in the present disclosure adhesive compositions comprising a solvent and one or more acrylic polymers, which are substantially completely dissolved in the solvent. Typically, the solvent comprises at least 20 wt.-%, preferably at least 30 wt.-%, most preferably at least 40 wt.-%, of the total weight of the adhesive composition. Suitable solvents for the solvent-based acrylic adhesive include, for example, alcohols, aliphatic and aromatic hydrocarbons, ketones, esters, and mixtures thereof. It is possible to use only a single solvent or a mixture of two or more solvents. Suitable solvent-based acrylic adhesives are substantially water-free, such as those containing less than 10 wt.-%, preferably less than 5 wt.-%, more preferably less than 1 wt.-% of water, based on the total weight of the adhesive composition.

The term "acrylic polymer" designates in the present disclosure homopolymers, copolymers and higher inter-polymers of an acrylic monomer with one or more further acrylic monomers and/or with one or more other ethylenically unsaturated monomers. The term "acrylic monomer" refers in the present disclosure to monomers having at least one (meth)acryloyl group in the molecule. Examples of acrylic monomers include, for example, (meth)acrylates, (meth)acrylic acid or derivatives thereof, for example, amides of (meth)acrylic acid or nitriles of (meth)acrylic acid, and (meth)acrylates with functional groups such as hydroxyalkyl (meth)acrylates, and hydroxyl group-containing (meth)acrylates. Preferred acrylic polymers to be used in the acrylic pressure sensitive adhesive layer contain acrylic monomers as the main monomer component, i.e. preferred acrylic polymers contain at least 30 wt.-%, preferably at least 40 wt.-%, more preferably at least 50 wt.-% of acrylic monomers, based on the weight of the acrylic polymer.

Particularly suitable acrylic polymers to be used in the acrylic pressure sensitive adhesive layer contain alkyl (meth)acrylates, preferably (meth)acrylic acid esters of alcohols containing from 1 to 24 carbon atoms, as the main monomer component. There are preferably more than 25 wt.-%, preferably more than 35 wt.-% of these types of acrylic monomers in the acrylic polymer. Examples of particularly suitable alkyl (meth)acrylates include, for example, methyl acrylate, methyl methacrylate, ethyl acrylate, n-butyl acrylate, n-butyl methacrylate, n-pentyl acrylate, n-hexyl acrylate, n-heptyl acrylate, n-octyl acrylate, n-octyl methacrylate, n-nonyl acrylate, lauryl acrylate, stearyl acrylate, behenyl acrylate, and their branched isomers, as for example isobutyl acrylate, 2-ethylhexyl acrylate, 2-ethylhexyl methacrylate, isooctyl acrylate, isooctyl methacrylate, and also cyclohexyl methacrylate, isobornyl acrylate, isobornyl methacrylate or 3,5-dimethyladamantyl acrylate.

Suitable comonomers to be used with the alkyl (meth)acrylates include, in particular, hydroxyl-group and hydroxyalkyl-group containing acrylic monomers. Examples of suitable hydroxyl-group and hydroxyalkyl-group containing acrylic monomers include, for example, 2-hydroxyethyl(meth)acrylate, 2-hydroxypropyl(meth)acrylate, 3-hydroxypropyl (meth)acrylate, 2-hydroxybutyl(meth)acrylate, 4-hydroxybutyl butyl(meth)acrylate, 2-hydroxy-hexyl(meth)acrylate, 6-hydroxy hexyl(meth) acrylate, 8-hydroxyoctyl(meth)acrylate, 10-hydroxydecyl (meth)acrylate, 12-hydroxylauryl(meth)acrylate. Furthermore, suitable are (4-hydroxymethyl cyclohexyl)methyl acrylate, polypropylene glycol mono (meth)acrylate, N-hydroxyethyl (meth)acrylamide, and N- hydroxypropyl (meth)acrylamide.

Hydroxyl-group and hydroxyalkyl-group containing acrylic monomers are preferably used in a range of 0.01 - 15 wt.-%, more preferably 0.1 - 10 wt.-%, based on the total amount of the monomers used in the synthesis of the acrylic polymer.

Other suitable comonomers for the acrylic polymers include vinyl compounds, in particular vinyl esters, vinyl halides, vinylidene halides, ethylenically unsaturated hydrocarbons with functional groups, and nitriles of ethylenically unsaturated hydrocarbons. Examples of suitable vinyl compounds include, for example, maleic anhydride, styrene, styrenic compounds, beta-acryloyloxypropionic acid, vinylacetic acid, fumaric acid, crotonic acid, aconitic acid, trichloroacrylic acid, itaconic acid, and vinyl acetate

According to the invention, the adhesive layer comprises at least 85 2. wt.-% of at least one acrylic polymer, based on the total weight of the adhesive layer.

According to one embodiment, the adhesive layer comprises at least 90 wt.-% of at least one acrylic polymer, based on the total weight of the adhesive layer.

Preferably, the at least one acrylic polymer has a glass transition temperature (T_{g}), determined by dynamical mechanical analysis (DMA) using an applied frequency of 1 Hz and a strain level of 0.1 %, of below 0 °C, preferably below - 20 °C.

Preferably, the at least one acrylic polymer has an average molecular weight (Mₙ) in the range of 50'000 - 1'000'000 g/mol, in particular 100'000 - 750'000 g/mol, more preferably 150'000 - 500'000 g/mol.

In addition to the at least one acrylic polymer, the adhesive layer may comprise one or more additional constituents including, for example, tackifying resins, waxes, and plasticizers as wells as one or more additives such as, for example, UV-light absorption agents, UV- and heat stabilizers, optical brighteners, pigments, dyes, and desiccants. Preferably, the amount of additional constituents and additives is not more than 15 wt.-%, more preferably not more than 10 wt.-%, most preferably not more than 5 wt.-%, based on the total weight of the adhesive layer.

Preferred thickness of the adhesive layer depends on the detailed composition of the adhesive. According to one or more embodiments, the adhesive layer has a thickness determined by using the measurement method as defined in DIN EN 1849-2 standard of 25 - 500 µm, preferably 50 - 250 µm, more preferably 75 - 200 µm, even more preferably 100 - 180, in particular 120 - 180 µm. Preferably, the second major surface of the waterproofing layer is coated with a continuous adhesive layer. The term "continuous layer" refers in the present disclosure to a layer consisting of one single area coated with the adhesive whereas a "discontinuous layer" is considered to consist of several isolated areas coated with the adhesive.

The detailed composition of the waterproofing layer is not particularly restricted. However, the composition of the waterproofing layer should be selected such that the roofing membrane fulfils the general requirements for roofing membranes used for providing fully-adhered roof systems, in particular the general requirements as defined in DIN 20000-201:2015-08 standard.

It may, for example, be preferred that the composition of the waterproofing layer is selected such that the roofing membrane shows an impact resistance measured according to EN 12691: 2005 standard in the range of 200 - 1500 mm and/or a longitudinal and a transversal tensile strength measured at a temperature of 23 °C according to DIN ISO 527-3 standard of at least 5 MPa and/or a longitudinal and transversal elongation at break measured at a temperature of 23 °C according to DIN ISO 527-3 standard of at least 300 % and/or a water resistance measured according to EN 1928 B standard of 0.6 bar for 24 hours and/or a maximum tear strength measured according to EN 12310-2 standard of at least 100 N.

According to one or more embodiments, the waterproofing layer comprises:
a) 25 - 65 wt.-%, preferably 30 - 60 wt.-% of a polyvinylchloride resin,
b) 15 - 50 wt.-%, preferably 20 - 40 wt.-% of at least one plasticizer, and
c) 0 - 30 wt.-%, preferably 0 - 20 wt.-% of at least one inert mineral filler, all proportions being based on the total weight of the waterproofing layer.

Preferably, polyvinylchloride resin has a K-value determined by using the method as described in ISO 1628-2-1998 standard in the range of 50 - 85, more preferably 65 - 75. The K-value is a measure of the polymerization grade of the PVC-resin and it is determined from the viscosity values of the PVC homopolymer as virgin resin, dissolved in cyclohexanone at 30° C.

Preferably, the composition of the waterproofing layer has a glass transition temperature (T_{g}), determined by dynamical mechanical analysis (DMA) using an applied frequency of 1 Hz and a strain level of 0.1 %, of below - 20 °C, more preferably below - 25 °C.

The type of the at least one plasticizer is not particularly restricted in the present invention. Suitable plasticizers for the PVC-resin include but are not restricted to, for example, linear or branched phthalates such as di-isononyl phthalate (DINP), di-nonyl phthalate (L9P), diallyl phthalate (DAP), di-2-ethylhexyl-phthalate (DEHP), dioctyl phthalate (DOP), diisodecyl phthalate (DIDP), and mixed linear phthalates (911P). Other suitable plasticizers include phthalate-free plasticizers, such as trimellitate plasticizers, adipic polyesters, and biochemical plasticizers. Examples of biochemical plasticizers include epoxidized vegetable oils, for example, epoxidized soybean oil and epoxidized linseed oil and acetylated waxes and oils derived from plants, for example, acetylated castor wax and acetylated castor oil.

Particularly suitable phthalate-free plasticizers to be used in the waterproofing layer include alkyl esters of benzoic acid, dialkyl esters of aliphatic dicarboxylic acids, polyesters of aliphatic dicarboxylic acids or of aliphatic di-, tri- and tetrols, the end groups of which are unesterified or have been esterified with monofunctional reagents, trialkyl esters of citric acid, acetylated trialkyl esters of citric acid, glycerol esters, benzoic diesters of mono-, di-, tri-, or polyalkylene glycols, trimethylolpropane esters, dialkyl esters of cyclohexanedicarboxylic acids, dialkyl esters of terephthalic acid, trialkyl esters of trimellitic acid, triaryl esters of phosphoric acid, diaryl alkyl esters of phosphoric acid, trialkyl esters of phosphoric acid, and aryl esters of alkanesulphonic acids.

According to one or more embodiments, the at least one plasticizer is selected from the group consisting of phthalates, trimellitate plasticizers, adipic polyesters, and biochemical plasticizers.

The term "inert mineral filler" designates in the present document mineral fillers, which, unlike mineral binders are not reactive with water, i.e. do not undergo a hydration reaction in the presence of water. Preferably the at least one inert mineral filler is selected from the group consisting of sand, granite, calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aerogels, glass beads, hollow glass spheres, ceramic spheres, bauxite, comminuted concrete, and zeolites.

The term "sand" refers in the present document to mineral clastic sediments (clastic rocks) which are loose conglomerates (loose sediments) of round or angular small grains, which were detached from the original grain structure during the mechanical and chemical degradation and transported to their deposition point, said sediments having an SiO₂ content of greater than 50 wt.-%, in particular greater than 75 wt.-%, particularly preferably greater than 85 wt.-%. The term "calcium carbonate" as inert mineral filler refers in the present document to calcitic fillers produced from chalk, limestone or marble by grinding and/or precipitation.

According to one or more embodiments, the at least one mineral filler is present in the waterproofing layer in an amount of 5 - 30 wt.-%, preferably 10 - 30 wt.-%, more preferably, 15 - 30 wt.-%, based on the total weight of the waterproofing layer.

The waterproofing layer can further comprise one or more additives, for example, UV- and heat stabilizers, antioxidants, flame retardants, dyes, pigments such as titanium dioxide and carbon black, matting agents, antistatic agents, impact modifiers, biocides, and processing aids such as lubricants, slip agents, antiblock agents, and denest aids.

The thickness of the waterproofing layer is not particularly restricted. According to one or more embodiments, the waterproofing layer has a thickness determined by using the measurement method as defined in DIN EN 1849-2 standard of 0.25 - 5.0 mm, preferably 0.5 - 4.5 mm, more preferably 1.0 - 3.0 mm, most preferably 1.0 - 2.5 mm.

According to one or more embodiments, the roofing membrane further comprises a layer of fiber material, which is fully embedded into the waterproofing layer. By the expression "fully embedded" is meant that the layer of fiber material layer is fully covered by the matrix of the waterproofing layer. The layer of fiber material may be used to ensure the mechanical stability of the waterproofing layer when the roofing membrane is exposed to varying environmental conditions, in particular to large temperature fluctuations.

The term "fiber material" designates in the present document materials composed of fibers comprising or consisting of, for example, organic, inorganic or synthetic organic materials. Examples of organic fibers include, for example, cellulose fibers, cotton fibers, and protein fibers. Particularly suitable synthetic organic materials include, for example, polyester, homopolymers and copolymers of ethylene and/or propylene, viscose, nylon, and polyamides. Fiber materials composed of inorganic fibers are also suitable, in particular, those composed of metal fibers or mineral fibers, such as glass fibers, aramid fibers, wollastonite fibers, and carbon fibers. Inorganic fibers, which have been surface treated, for example, with silanes, may also be suitable. The fiber material can comprise short fibers, long fibers, spun fibers (yarns), or filaments. The fibers can be aligned or drawn fibers. It may also be advantageous that the fiber material is composed of different types of fibers, both in terms of geometry and composition.

Preferably, the layer of fiber material is selected from the group consisting of non-woven fabrics, woven fabrics, and non-woven scrims.

The term "non-woven fabric" designates in the present document materials composed of fibers, which are bonded together by using chemical, mechanical, or thermal bonding means, and which are neither woven nor knitted. Non-woven fabrics can be produced, for example, by using a carding or needle punching process, in which the fibers are mechanically entangled to obtain the nonwoven fabric. In chemical bonding, chemical binders such as adhesive materials are used to hold the fibers together in a non-woven fabric.

The term "non-woven scrim" designates in the present document web-like non-woven products composed of yarns, which lay on top of each other and are chemically bonded to each other. Typical materials for non-woven scrims include metals, fiberglass, and plastics, in particular polyester, polypropylene, polyethylene, and polyethylene terephthalate (PET).

According to one or more embodiments, the layer of fiber material is a non-woven fabric, preferably a non-woven fabric, more preferably a non-woven fabric having a mass per unit weight of not more than 250 g/m², preferably not more than 200 g/m². According one or more embodiments, the layer of fiber material is a non-woven fabric having a mass per unit weight of 15 - 150 g/m², preferably 20 - 125 g/m², more preferably 25 - 100 g/m², most preferably 30 - 85 g/m².

Preferably, the non-woven fabric of the layer of fiber material comprises synthetic organic and/or inorganic fibers. Particularly suitable synthetic organic fibers for the non-woven fabric include, for example, polyester fibers, polypropylene fibers, polyethylene fibers, nylon fibers, and polyamide fibers. Particularly suitable inorganic fibers for the non-woven fabric include, for example, glass fibers, aramid fibers, wollastonite fibers, and carbon fibers.

According to one or more embodiments, the non-woven fabric of the layer of fiber material has as the main fiber component synthetic organic fibers, preferably selected from the group consisting of polyester fibers, polypropylene fibers, polyethylene fibers, nylon fibers, and polyamide fibers. According to one or more further embodiments, the non-woven fabric of the layer of fiber material has as the main fiber component inorganic fibers, preferably selected from the group consisting of glass fibers, aramid fibers, wollastonite fibers, and carbon fibers, more preferably glass fibers.

According to one or more embodiments, the roofing membrane further comprises a release liner covering at least portion of the outer major surface of the adhesive layer facing away from the second major surface of the waterproofing layer. Preferably, the adhesive layer and the release liner are directly connected to each other over at least portion of their opposing major surfaces. The release liner may be used to prevent premature unwanted adhesion and to protect the adhesive layer from moisture, fouling, and other environmental factors. In case the roofing membrane is provided in form of rolls, the release liner enables ease of unwind without sticking of the adhesive to the back side of the roofing membrane. The release liner may be sliced into multiple sections to allow portioned detachment of the liner from the adhesive layer.

Suitable materials for the release liner include Kraft paper, polyethylene coated paper, silicone coated paper as well as polymeric films, for example, polyethylene, polypropylene, and polyester films coated with polymeric release agents selected from silicone, silicone urea, urethanes, waxes, and long chain alkyl acrylate release agents.

The roofing membrane of the present invention may be a single- or a multi-ply roofing membrane. The term "single-ply roofing membrane" designates in the present document membranes comprising one single waterproofing layer whereas the term "multi-ply roofing membrane" designates membranes comprising more than one waterproofing layers. In case of a multi-ply roofing membrane, the waterproofing layers may have similar or different compositions.

Single- and multi-ply membranes are known to a person skilled in the art and they may be produced by any conventional means, such as by way of extrusion or co-extrusion, calendaring, or by spread coating. According to one or more embodiments, the roofing membrane is a single- ply membrane comprising exactly one waterproofing layer.

According to one or more further embodiments, the roofing membrane is a multi-ply membrane comprising at least two waterproofing layers, preferably two waterproofing layers. In these embodiments, the roofing membrane further comprises a second waterproofing layer having first and second major surfaces, wherein the second major surface of the second barrier layer is directly or indirectly bonded to at least portion of the first major surface of the waterproofing layer.

According to one or more embodiments, the second waterproofing layer is a polyvinylchloride-based waterproofing layer. Preferably, the second waterproofing layer has substantially similar composition as the waterproofing layer. The second waterproofing layer may further comprise a layer of fiber material, which is fully embedded into the second waterproofing layer. It may, however, be also possible or even preferred that the second waterproofing layer does not contain a layer of fiber material fully embedded into the second waterproofing layer.

Preferably, the roofing membrane has a 90° peel resistance from stainless steel, measured by using the method as defined in EN DIN 1372 standard, of at least 5 N/50 mm, more preferably at least 10 N/50 mm, most preferably at least 15 N/50 mm. Such peel strengths have been found out with the adhesive layer as defined above.

The roofing membrane of the present invention is typically provided in a form of a prefabricated membrane article, which is delivered to the construction site and unwound from rolls to provide sheets having a width of 1 - 5 m and length of several times the width. However, the roofing membrane can also be used in the form of strips having a width of typically 1 - 20 cm, for example so as to seal joints between two adjacent membranes. Moreover, the roofing membrane can also be provided in the form of planar bodies, which are used for repairing damaged locations in existing adhered waterproofing or roofing systems.

The preferences given above for the waterproofing layer(s), the adhesive layer, the layer of fiber material, and to the release liner apply equally to all aspects of the present invention unless otherwise stated.

Another subject of the present invention is a fully adhered roof system comprising a roof substrate and a roofing membrane according to the present invention directly adhered to a surface of the roof substrate via the adhesive layer. The expression "directly adhered" is understood to mean that there are no further layers present between the adhesive layer and the roof substrate.

The roof substrate to which the roofing membrane is bonded is preferably selected from the group consisting of an insulation board, a cover board, and an existing roofing membrane.

According to one or more embodiments at least 50 %, preferably at least 75 %, most preferably at least 85 % of the area of the second major surface of the waterproofing layer is adhered to the surface of the roof substrate via the adhesive layer. According to one or more embodiments, substantially the entire area of the second major surface of the waterproofing layer is adhered to the surface of the roof substrate via the adhesive layer.

### Detailed description of the Drawings

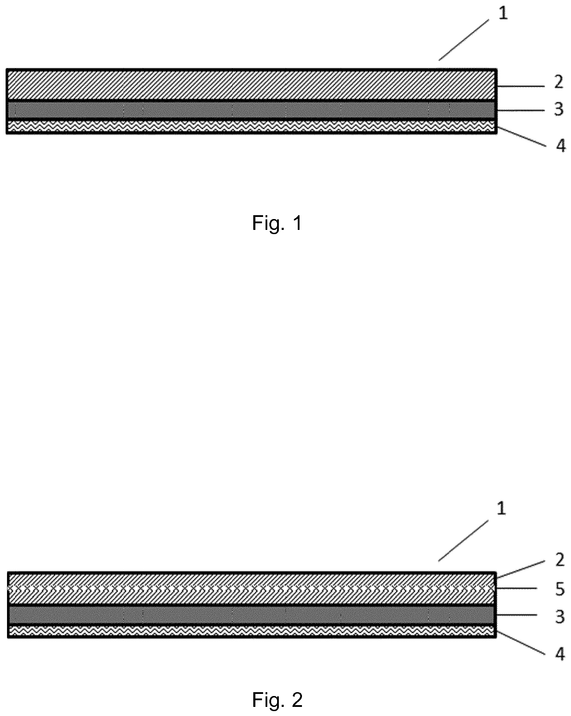

Fig. 1 shows a cross-section of a roofing membrane (1) comprising a waterproofing layer (2), an adhesive layer (3), and a release liner (4) covering the outer major surface of adhesive layer (3). In this embodiment, the adhesive layer (3) covers substantially the entire area of the second major surface of the waterproofing layer (2) and the release liner (4) covers substantially the entire area of the outer major surface of the adhesive layer (3) facing away from the second major surface of the waterproofing layer (2).

Fig. 2 shows a cross-section of a roofing membrane (1) according to one embodiment of the roofing membrane presented in Fig. 1. In this embodiment, roofing membrane (1) further comprises a layer of fiber material (5) fully embedded into the waterproofing layer (2).

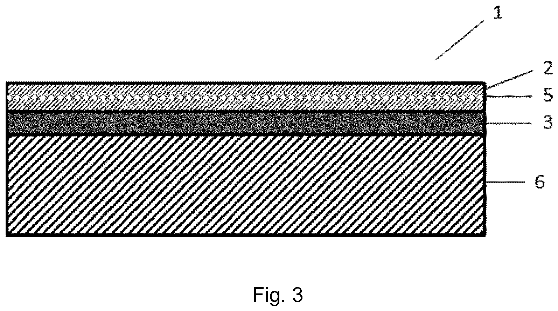

Fig. 3 shows a cross-section of a fully-adhered roof system comprising a roof substrate (6) and a roofing membrane (1), which is directly adhered to a surface of the roof substrate (6) via the adhesive layer (3). In this embodiment, substantially the entire area of the second major surface of the waterproofing layer (2) is adhered to the surface of the roof substrate (6) via the adhesive layer (3). Furthermore, the roofing membrane (1) further comprises a layer of fiber material (5), which is fully embedded into the waterproofing layer (2).

### Examples

### Preparation roofing membranes

A roofing membrane according to the present invention was prepared by coating a PVC membrane Sarnafil G410-15 (available from Sika AG) having a nominal thickness 1.5 mm with a layer of water-based acrylic dispersion pressure sensitive adhesive using a coating weight of 140 g/m². The applied adhesive layer was covered with siliconized PE release liner having a thickness of 80 µm.

A reference roofing membrane was prepared by coating a PVC membrane Sarnafil G410-15 (available from Sika AG) with a styrene block copolymer (SBS/SIS) based hot melt pressure sensitive adhesive using a coating weight of 140 g/m². The applied adhesive layer was covered with siliconized PE release liner having a thickness of 80 µm.

Both roofing membranes were stored for 4 weeks at a temperature of 80 °C before measuring of the peel strengths obtained with the adhesive layers.

### Peel resistance (strength)

The peel resistances from a metal surface were measured using the method as defined in EN DIN 1372 standard. In the peel resistance measurements, a sample strip of the tested roofing membrane was peeled off at a peeling angle of 90 ° using a Zwick tensile testing apparatus and a constant cross beam speed of 100 mm/min. The average peel resistance was calculated as average peel force per width of the strip [N/ 50 mm] during peeling over a length of approximately 10 cm thus excluding the first and last fifth of the total peeling length from the calculation. The average peel resistance values were calculated as an average of measured values obtained with two similar roofing membranes.

In case of the roofing membrane of the present invention, the average peel resistance of 28 N/50 mm was obtained whereas the reference roofing membrane showed a complete loss of adhesion due to the migration of plasticizers from the PVC membrane into the adhesive layer.

## Claims

1. A self-adhering roofing membrane (1) comprising:
i. A polyvinylchloride-based waterproofing layer (2) having a first and a second major surface,
ii. An adhesive layer (3) coated on and covering at least portion of the second major surface of the waterproofing layer (2),
iii. Optionally a release liner (4), **characterized in that** the adhesive layer is an acrylic pressure sensitive adhesive, wherein the adhesive layer (3) comprises at least 85 wt.-% of at least one acrylic polymer, based on the total weight of the adhesive layer.

2. The roofing membrane according to claim 1, **characterized in that** the adhesive layer (3) covers substantially the entire area of the second major surface of the waterproofing layer (2).

3. The roofing membrane according to claim 1 or 2, **characterized in that** the adhesive layer (3) comprises at least 90 wt.-% of at least one acrylic polymer, based on the total weight of the adhesive layer.

4. Roofing membrane according to claim 3, **characterized in that** the at least one acrylic polymer has a glass transition temperature (T_{g}), determined by dynamical mechanical analysis (DMA) using an applied frequency of 1 Hz and a strain level of 0.1 %, of below 0 °C, preferably below - 20 °C.

5. The roofing membrane according to any of previous claims, **characterized in that** the adhesive layer (3) has a thickness determined by using the measurement method as defined in DIN EN 1849-2 standard of 25 - 500 µm, preferably 50 - 250 µm.

6. The roofing membrane according to any of previous claims, **characterized in that** the waterproofing layer (2) comprises:
a) 25 - 65 wt.-% of a polyvinylchloride resin,
b) 15 - 50 wt.-% of at least one plasticizer, and
c) 0 - 30 wt.-% of at least one inert mineral filler, all proportions being based on the total weight of the waterproofing layer (2).

7. The roofing membrane according to claim 6, **characterized in that** the composition of the waterproofing layer has a glass transition temperature (T_{g}), determined by dynamical mechanical analysis (DMA) using an applied frequency of 1 Hz and a strain level of 0.1 %, of below - 20 °C, preferably below - 25 °C.

8. The roofing membrane according claim 6 or 7, **characterized in that** the at least one plasticizer is selected from the group consisting of linear and branched phthalates, trimellitate plasticizers, adipic polyesters, and biochemical plasticizers.

9. The roofing membrane according to any of claims 6-8, **characterized in that** the at least one inert mineral filler is selected from the group consisting of sand, granite, calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aerogels, glass beads, hollow glass spheres, ceramic spheres, bauxite, comminuted concrete, and zeolites.

10. The roofing membrane according to any of previous claims, **characterized in that** the waterproofing layer (2) has a thickness determined by using the measurement method as defined in DIN EN 1849-2 standard of 0.5 - 5.0 mm, preferably 1.0 - 2.5 mm.

11. The roofing membrane according to any of previous claims **characterized in that** it further comprises a layer of fiber material (5) fully embedded into the waterproofing layer (2).

12. The roofing membrane according to claim 11, **characterized in that** the layer of fiber material (5) is a non-woven fabric having a mass per unit area of 15 - 150 g/m², preferably 25 - 100 g/m².

13. The roofing membrane according to claim 12, **characterized in that** the non-woven fabric comprises inorganic fibers, preferably glass fibers.

14. The roofing membrane according to any of previous claims **characterized in that** it further comprises a release liner (4) covering at least portion of the outer major surface of the adhesive layer (3) facing away from the second major surface of the waterproofing layer (2).

15. A fully-adhered roof system comprising a roof substrate (6) and a roofing membrane (1) according to any of claims 1-14 directly adhered to a surface of the roof substrate (6) via the adhesive layer (3).

16. The fully-adhered roof system according to claim 15, **characterized in that** the roof substrate (6) is selected from the group consisting of an insulation board, a cover board, and an existing roofing membrane.

17. The fully-adhered roof system according to claim 15 or 16, **characterized in that** at least 50 %, preferably at least 75 %, most preferably at least 85 %, of the entire area of the second major surface of the waterproofing layer (2) is bonded to the surface of the roof substrate (6) via the adhesive layer (3).

## Patentansprüche

1. Selbstklebende Dachbahn (1), Folgendes umfassend:
i. eine auf Polyvinylchlorid basierende Sperrschicht (2) mit einer ersten und einer zweiten Hauptoberfläche,
ii. eine Klebeschicht (3), die auf mindestens einem Abschnitt der zweiten Hauptoberfläche der Sperrschicht (2) beschichtet ist und diese bedeckt,
iii. gegebenenfalls eine Trennfolie (4), **dadurch gekennzeichnet, dass** die Klebeschicht ein druckempfindlicher Acryl-Klebstoff ist, wobei die Klebeschicht (3) mindestens 85 Masse-%, basierend auf der Gesamtmasse der Klebeschicht, mindestens eines Acryl-Polymers enthält.

2. Dachbahn nach Anspruch 1, **dadurch gekennzeichnet, dass** die Klebeschicht (3) im Wesentlichen die gesamte Fläche der zweiten Hauptoberfläche der Sperrschicht (2) bedeckt

3. Dachbahn nach Anspruch 1 oder 2, **dadurch gekennzeichnet, dass** die Klebeschicht (3) mindestens 90 Masse-%, basierend auf der Gesamtmasse der Klebeschicht, mindestens eines Acryl-Polymers enthält.

4. Dachbahn nach Anspruch 3, **dadurch gekennzeichnet, dass** das mindestens eine Acryl-Polymer eine Glasübergangstemperatur (T_{g}) , die durch dynamische mechanische Analyse (DMA) unter Verwendung einer angelegten Frequenz von 1 Hz und einem Belastungspegel von 0,1 % bestimmt wird, von unter 0 °C, vorzugsweise von unter -20 °C, aufweist.

5. Dachbahn nach einem der vorhergehenden Ansprüche, **dadurch gekennzeichnet, dass** die Klebeschicht (3) eine Dicke, die unter Verwendung des Messverfahrens bestimmt wird, wie in der Norm DIN EN 1849-2 definiert, von 25 bis 500 µm, vorzugsweise von 50 bis 250 µm, aufweist.

6. Dachbahn nach einem der vorhergehenden Ansprüche, **dadurch gekennzeichnet, dass** die Sperrschicht (2) Folgendes enthält:
a) 25 bis 65 Masse-% eines Polyvinylchlorid-Harzes,
b) 15 bis 50 Masse-% mindestens eines Weichmachers und
c) 0 bis 30 Masse-% mindestens eines inerten mineralischen Füllmittels, wobei alle Anteile auf der Gesamtmasse der Sperrschicht (2) basieren.

7. Dachbahn nach Anspruch 6, **dadurch gekennzeichnet, dass** die Zusammensetzung der Sperrschicht eine Glasübergangstemperatur (T_{g}) , die durch dynamische mechanische Analyse (DMA) unter Verwendung einer angelegten Frequenz von 1 Hz und einem Belastungspegel von 0,1 % bestimmt wird, von unter -20 °C, vorzugsweise von unter -25 °C, aufweist.

8. Dachbahn nach Anspruch 6 oder 7, **dadurch gekennzeichnet, dass** der mindestens eine Weichmacher aus der Gruppe ausgewählt ist, bestehend aus linearen und verzweigten Phthalaten, Trimellitat-Weichmachern, Adipinsäurepolyestern und biochemischen Weichmachern.

9. Dachbahn nach einem der Ansprüche 6 bis 8, **dadurch gekennzeichnet, dass** das mindestens eine inerte mineralische Füllmittel aus der Gruppe ausgewählt ist, bestehend aus Sand, Granit, Calciumcarbonat, Ton, Blähton, Kieselgur, Bimsstein, Glimmer, Kaolin, Talk, Dolomit, Xonotlit, Perlit, Vermikulit, Wollastonit, Baryt, Magnesiumcarbonat, Calciumhydroxid, Calciumaluminaten, Silika, pyrogener Kieselsäure, geschmolzenem Silikatglas, Aerogelen, Glaskügelchen, Hohlglaskugeln, Keramikkugeln, Bauxit, pulverisiertem Beton und Zeolithen.

10. Dachbahn nach einem der vorhergehenden Ansprüche, **dadurch gekennzeichnet, dass** die Sperrschicht (2) eine Dicke, die unter Verwendung des Messverfahrens bestimmt wird, wie in der Norm DIN EN 1849-2 definiert, von 0,5 bis 5,0 mm, vorzugsweise von 1,0 bis 2,5 mm, aufweist.

11. Dachbahn nach einem der vorhergehenden Ansprüche, **dadurch gekennzeichnet, dass** sie weiterhin eine Schicht aus Fasermaterial (5) umfasst, die vollständig in die Sperrschicht (2) eingebettet ist.

12. Dachbahn nach Anspruch 11, **dadurch gekennzeichnet, dass** die Schicht aus Fasermaterial (5) ein Faservlies mit einem Flächengewicht von 15 bis 150 g/m², vorzugsweise von 25 bis 100 g/m², ist.

13. Dachbahn nach Anspruch 12, **dadurch gekennzeichnet, dass** das Faservlies anorganische Fasern, vorzugsweise Glasfasern, enthält.

14. Dachbahn nach einem der vorhergehenden Ansprüche, **dadurch gekennzeichnet, dass** sie weiterhin eine Trennfolie (4) umfasst, die mindestens einen Abschnitt der äußeren Hauptoberfläche der Klebeschicht (3) bedeckt, die der zweiten Hauptoberfläche der Sperrschicht (2) abgewandt ist.

15. Vollständig geklebtes Dachsystem, ein Dachsubstrat (6) und eine Dachbahn (1) nach einem der Ansprüche 1 bis 14 umfassend, die durch die Klebeschicht (3) unmittelbar an eine Oberfläche des Dachsubstrats (6) geklebt ist.

16. Vollständig geklebtes Dachsystem nach Anspruch 15, **dadurch gekennzeichnet, dass** das Dachsubstrat (6) aus der Gruppe ausgewählt ist, bestehend aus einer Isolierplatte, einer Deckplatte und einer vorhandenen Dachbahn.

17. Vollständig geklebtes Dachsystem nach Anspruch 15 oder 16, **dadurch gekennzeichnet, dass** mindestens 50 %, vorzugsweise mindestens 75 %, ganz besonders bevorzugt mindestens 85 %, der gesamten Fläche der zweiten Hauptoberfläche der Sperrschicht (2) durch die Klebeschicht (3) an die Oberfläche des Dachsubstrats (6) gebondet ist.

## Revendications

1. Membrane de toiture autoadhésive (1) comprenant :
i. une couche d'imperméabilisation (2) à base de poly(chlorure de vinyle) possédant une première et une deuxième surface principale,
ii. une couche d'adhésif (3) revêtue sur et couvrant au moins une partie de la deuxième surface principale de la couche d'imperméabilisation (2),
iii. éventuellement une doublure détachable (4), **caractérisée en ce que** la couche d'adhésif est un adhésif acrylique sensible à la pression, la couche d'adhésif (3) comprenant au moins 85 % en poids d'au moins un polymère acrylique, sur la base du poids total de la couche d'adhésif.

2. Membrane de toiture selon la revendication 1, **caractérisée** ce que la couche d'adhésif (3) couvre sensiblement la surface entière de la deuxième surface principale de la couche d'imperméabilisation (2).

3. Membrane de toiture selon la revendication 1 ou 2, **caractérisée en ce que** la couche d'adhésif (3) comprend au moins 90 % en poids d'au moins un polymère acrylique, sur la base du poids total de la couche d'adhésif.

4. Membrane de toiture selon la revendication 3, **caractérisée en ce que** l'au moins un polymère acrylique possède une température de transition vitreuse (T_{g}), déterminée par analyse mécanique dynamique (DMA) en utilisant une fréquence appliquée de 1 Hz et un taux de contrainte de 0,1 %, inférieure à 0 °C, préférablement inférieure à -20 °C.

5. Membrane de toiture selon l'une quelconque des revendications précédentes, **caractérisée en ce que** la couche d'adhésif (3) possède une épaisseur déterminée en utilisant le procédé de mesure tel que défini dans la norme DIN EN 1849-2 de 25 à 500 µm, préférablement de 50 à 250 µm.

6. Membrane de toiture selon l'une quelconque des revendications précédentes, **caractérisée en ce que** la couche d'imperméabilisation (2) comprend :
a) 25 à 65 % en poids d'une résine de poly(chlorure de vinyle),
b) 15 à 50 % en poids d'au moins un plastifiant, et
c) 0 à 30 % en poids d'au moins une charge minérale inerte, toutes les proportions étant basées sur le poids total de la couche d'imperméabilisation (2).

7. Membrane de toiture selon la revendication 6, **caractérisée en ce que** la composition de la couche d'imperméabilisation possède une température de transition vitreuse (T_{g}), déterminée par analyse mécanique dynamique (DMA) en utilisant une fréquence appliquée de 1 Hz et un taux de contrainte de 0,1 %, inférieure à -20 °C, préférablement inférieure à -25 °C.

8. Membrane de toiture selon la revendication 6 ou 7, **caractérisée en ce que** l'au moins un plastifiant est choisi dans le groupe constitué par des phtalates linéaires et ramifiés, des plastifiants de type trimellitate, des polyesters adipiques et des plastifiants biochimiques.

9. Membrane de toiture selon l'une quelconque des revendications 6 à 8, **caractérisée en ce que** l'au moins une charge minérale inerte est choisie dans le groupe constitué par le sable, le granit, le carbonate de calcium, l'argile, l'argile expansée, la terre de diatomées, la pierre ponce, le mica, le kaolin, le talc, la dolomite, la xonotlite, la perlite, la vermiculite, la Wollastonite, la baryte, le carbonate de magnésium, l'hydroxyde de calcium, les aluminates de calcium, la silice, la silice fumée, la silice fondue, les aérogels, les billes de verre, les sphères de verre creuses, les sphères de céramique, la bauxite, le béton broyé et les zéolithes.

10. Membrane de toiture selon l'une quelconque des revendications précédentes, **caractérisée en ce que** la couche d'imperméabilisation (2) possède une épaisseur déterminée en utilisant le procédé de mesure tel que défini dans la norme DIN EN 1849-2 de 0,5 à 5,0 mm, préférablement de 1,0 à 2,5 mm.

11. Membrane de toiture selon l'une quelconque des revendications précédentes, **caractérisée en ce qu'**elle comprend en outre une couche de matériau fibreux (5) totalement incorporée dans la couche d'imperméabilisation (2).

12. Membrane de toiture selon la revendication 11, **caractérisée en ce que** la couche de matériau fibreux (5) est un tissu non-tissé possédant une masse par unité de surface de 15 à 150 g/m², préférablement de 25 à 100 g/m².

13. Membrane de toiture selon la revendication 12, **caractérisée en ce que** le tissu non-tissé comprend des fibres inorganiques, préférablement des fibres de verre.

14. Membrane de toiture selon l'une quelconque des revendications précédentes, **caractérisée en ce qu'**elle comprend en outre une doublure détachable (4) couvrant au moins une partie de la surface principale extérieure de la couche d'adhésif (3) située à l'opposé de la deuxième surface principale de la couche d'imperméabilisation (2).

15. Système de toit entièrement collé comprenant un substrat de toit (6) et une membrane de toiture (1) selon l'une quelconque des revendications 1 à 14 directement collé sur une surface du substrat de toit (6) via la couche d'adhésif (3)

16. Système de toit entièrement collé selon la revendication 15, **caractérisé en ce que** le substrat de toit (6) est choisi dans le groupe constitué par un panneau d'isolation, un panneau de couverture, et une membrane de toiture existante.

17. Système de toit entièrement collé selon la revendication 15 ou 16, **caractérisé en ce qu'**au moins 50 %, préférablement au moins 75 %, le plus préférablement au moins 85 %, de la surface entière de la deuxième surface principale de la couche d'imperméabilisation (2) sont liés à la surface du substrat de toit (6) via la couche d'adhésif (3) .
